# EUROPEAN PATENT APPLICATION

(11) **EP 4 822 753 A1**
(43) Date of publication of application: **14.10.2026**
(21) Application number: 26163279.8
(22) Date of filing: 09.03.2026
(51) Int. Cl.: H01M 4/04, C08F 2/50, H01M 4/13, H01M 4/139, H01M 50/474, H01M 50/477, H01M 50/486

(54) **ELECTRODE FOR SECONDARY BATTERY, SECONDARY BATTERY INCLUDING THE ELECTRODE, AND METHOD OF MANUFACTURING ELECTRODE FOR SECONDARY BATTERY**

(30) Priority: 08.04.2025 KR 20250045228
(71) Applicant: SAMSUNG SDI CO., LTD., Yongin-si, Gyeonggi-do 17084 (KR)
(72) Inventor: KIM, Yongsoo, Yongin-si 17084 (KR); KIM, Hyunchul, Yongin-si 17084 (KR); KIM, Yongin, Yongin-si 17084 (KR); AN, Eunjin, Yongin-si 17084 (KR); KIM, Sanggi, Yongin-si 17084 (KR); KWAK, Junhyeok, Yongin-si 17084 (KR); HONG, Chan, Yongin-si 17084 (KR)
(74) Representative: Maiwald GmbH

(57) **Abstract**

An electrode for secondary battery includes a substrate layer, an active material layer coated on at least one surface of the substrate layer, and a guide member formed along sides of the active material layer. The guide member includes a polymer cured by exposure to electromagnetic waves.

## Description

### BACKGROUND

### Field

The present disclosure relates to an electrode for secondary battery, a secondary battery including the electrode, and a method of manufacturing an electrode for secondary battery.

### Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders. Large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the electrode assembly, and electrode terminals connected to the electrode assembly.

A manufacturing process of a secondary battery includes three steps: an electrode manufacturing process, an electrode assembly manufacturing process, and a formation process. The electrode manufacturing process may be divided into an electrode slurry process, an electrode coating and rolling process, a slitting process, etc.

The electrode slurry process may include a process of mixing components for forming an electrode active layer in which an electrochemical reaction occurs at electrodes. A composition mixed in such a process may be generally referred to as an electrode mixture.

An electrode coating process may be a process that coats an electrode mixture on a current collector (or a substrate layer) that is electrically conductive.

In the electrode coating process, the thickness of an electrode plate may vary when an electrode mixture is coated on a current collector. To balance such variation, the development of an electrode for secondary battery and a method for manufacturing an electrode for secondary battery is required.

The information disclosed in this background section is for the enhancement of understanding the present disclosure and may contain information that does not constitute related (or prior) art.

### SUMMARY

The present disclosure provides an electrode for a secondary battery, a secondary battery including the electrode, and a method of manufacturing an electrode for secondary battery to solve the above-described problems.

However, the technical problems to be solved by the present disclosure are not limited to the above-described problems, and other problems not mentioned herein, and aspects and features of the present disclosure that address such problems, will be clearly understood by those skilled in the art from the description of the present disclosure below.

According to embodiments of the present disclosure, there is provided an electrode for secondary battery, including a substrate layer, an active material layer coated on at least one surface of the substrate layer, and a guide member formed along sides of the active material layer, wherein the guide member comprises a polymer cured by exposure to electromagnetic waves.

According to an embodiment, the polymer may be formed by a reaction between a photoinitiator and a polymerization monomer exposed to the electromagnetic waves.

According to an embodiment, the polymerization monomer may include trimethylolpropane triacrylate (TMPTA), 1,4-butanediol diacrylate (BDDA), 2-ethylhexyl acrylate (2-EHA), 2-hydroxypropyl acrylate (2-HPA), pentaerythritol tetraacrylate (PETA), glycidyl acrylate, or a combination thereof.

According to an embodiment, the photoinitiator may include a radical photoinitiator, a cationic photoinitiator, or a combination thereof.

According to an embodiment, the radical photoinitiator may include a hexaarylbiimidazole (HABI) functional group.

According to an embodiment, a wavelength of the electromagnetic wave may be 254 nm to 365 nm.

According to an embodiment, the guide member may include a first guide block and a second guide block, wherein the active material layer is disposed between the first guide block and the second guide block.

According to an embodiment, a first side surface of the active material layer contacting the first guide block may be perpendicular to the substrate layer and a second side surface of the active material layer contacting the second guide block may be perpendicular to the substrate layer.

According to an embodiment, a thickness of the guide member may be equal to or greater than a thickness of the active material layer.

According to one embodiment, a thickness of the guide member may be less than a thickness of the active material layer.

According to embodiments of the present disclosure, there is provided a method for manufacturing an electrode for secondary battery, the method including providing a substrate layer, forming a guide member on at least one surface of the substrate layer, and coating an active material layer on the at least one surface of the substrate layer, wherein the guide member comprises a polymer cured by exposure to electromagnetic waves.

According to a embodiment, the polymer may include a photoinitiator and a polymerization monomer, wherein forming the guide member comprises exposing the photoinitiator and the polymerization monomer to the electromagnetic waves.

According to an embodiment, the forming and the coating may be performed simultaneously.

According to an embodiment, the coating may be performed after forming the guide member.

According to an embodiment, forming the guide member may include forming a first guide block and a second guide block on the at least one surface of the substrate layer with a predetermined distance between the first guide block and the second guide block, wherein coating the active material comprises discharging an active material slurry between the first guide block and the second guide block.

According to embodiments of the present disclosure, there is provided a secondary battery including a case, an electrode assembly accommodated in the case and including a first electrode, a second electrode, and a separator between the first and second electrodes, wherein at least one of the first electrode or the second electrode includes a substrate layer, an active material layer coated on at least one surface of the substrate layer, and a guide member formed along sides of the active material layer, wherein the guide member comprises a polymer cured by exposure to electromagnetic waves.

In an electrode for secondary battery according to some embodiments of the present disclosure, a guide member formed along a side surface of an active material layer causes a uniform thickness of an active material layer coated during an electrode coating process.

According to some embodiments, in an electrode coating process for manufacturing an electrode, thickness variation of an active material layer that occurs during a conventional composite coating process may be reduced or minimized, and the defect rate of cells in the winding or stacking process of an electrode may be reduced.

According to a method of manufacturing an electrode for secondary battery, with a process of irradiating electromagnetic waves and without an additional process, thickness variation that occurs on an electrode plate of a secondary battery may be prevented, thereby providing an electrode for secondary battery with uniform quality that is formed rapidly and effectively.

However, aspects and features of the present disclosure are not limited to those described above, and other aspects and features not mentioned will be clearly understood by a person skilled in the art from the detailed description below.

### BRIEF DESCRIPTION OF DRAWINGS

The drawings illustrate embodiments of the present disclosure, and further describe aspects and features of the present disclosure together with the detailed description of the present disclosure. The present disclosure should not be construed as being limited to the drawings.
FIG. 1 is an outline view illustrating an electrode and a lamp for secondary battery according to embodiments of the present disclosure;
FIG. 2 is a plane view illustrating a cross-section of an electrode for secondary battery according to embodiments of the present disclosure;
FIG. 3 is a plane view illustrating a cross-section of an electrode for secondary battery according to another of the present disclosure;
FIG. 4 is a cross-sectional view illustrating an electrode for secondary battery without a guide member as a comparative example;
FIG. 5 is a flowchart of a method for manufacturing an electrode for secondary battery according to embodiments of the present disclosure;
FIG. 6 is a view illustrating an electrode manufacturing device that embodies a method for manufacturing an electrode for secondary battery according to embodiments of the present disclosure;
FIG. 7 is a view illustrating an electrode manufacturing device that embodies a method for manufacturing an electrode for secondary battery according to embodiments of the present disclosure;
FIG. 8 is a view illustrating a secondary battery according to embodiments of the present disclosure;
FIG. 9 is a view illustrating a secondary battery according to embodiments of the present disclosure;
FIG. 10 is a view illustrating a secondary battery according to embodiments of the present disclosure; and
FIG. 11 is a view illustrating a secondary battery according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

According to embodiments of the present disclosure, the sizes of layers and areas are illustrated in the drawings may be exaggerated for clarity of explanation. The sizes in the drawings are only for ease of explanation, but the present disclosure is not limited thereto. Like reference numerals in the drawings denote like elements throughout the specification.

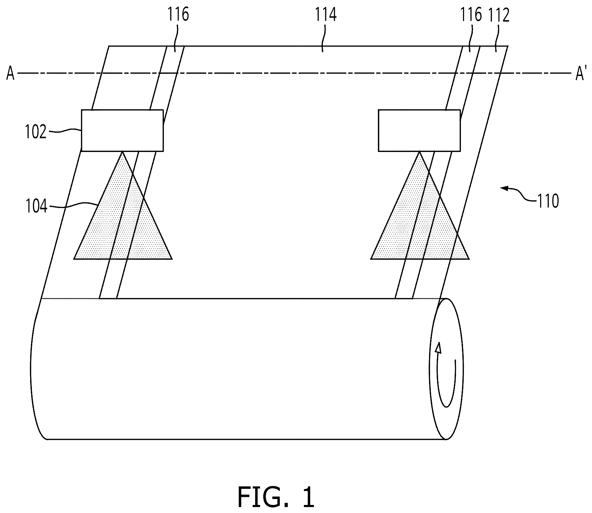

FIG. 1 is an outline view illustrating an electrode and a lamp for secondary battery according to embodiments of the present disclosure.

Referring to FIG. 1, an electrode for secondary battery 110 may include a substrate layer 112, an active material layer 114 disposed on the substrate layer 112, and a guide member disposed on the substrate layer 112. The electrode for secondary battery 110 may be a positive electrode or a negative electrode.

The electrode for secondary battery 110 may include the substrate layer 112 on which an electrode active material is coated. The active material layer 114 may be formed by coating an electrode active material on the substrate layer 112. The method of coating an electrode active material is no limited and may be a dry or wet method. Further, a binder that easily allows the deposition of the electrode active material may also be coated on the substrate layer 114.

The composition of the active material layer 114 may vary depending on the types of electrodes to be manufactured. For example, when the electrode for secondary battery 110 to be manufactured is a positive electrode, the electrode active material may be a positive electrode active material. But when the electrode for secondary battery 110 to be manufactured is a negative electrode, the electrode active material may be a negative active material.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material such as crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy where Q is selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surfaces of the silicon particles. For example, the silicon-carbon composite may include secondary particles (core) in which primary silicon particles are assembled, and an amorphous carbon coating layer (shell) on the surfaces of the secondary particles. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The above-described electrode active material, other additives and solvents for imparting viscosity, and dispersing powder may be mixed. By applying the mixed material in the form of a slurry (or an electrode slurry) having fluidity on the substrate layer 112, the active material layer 114 of the electrode for secondary battery 110 may be formed. The other additives may include a conductive material, a filler, or a binder for bonding between powders and adhesion to a current collector.

The slurry may be an amorphous mixture in the form of powder or a lump of powder. When an electrode active material, a conductive material, and a binder are mixed in a wet or dry method, but the present disclosure is not limited in this regard may be mixed by various methods.

When the active material layer 114 is a positive electrode active material layer, the active material layer 114 may include the above-described positive electrode active material, and further include a binder and/or a conductive material. According to embodiments of the present disclosure, the active material layer 114 may further include an additive that performs as a sacrificial positive electrode.

The amount of the electrode active material may be 90 wt% to 99.5 wt% with respect to 100 wt% of the active material layer 114, and the amounts of the binder and the conductive material may be 0.5 wt% to 5 wt%, respectively, with respect to 100 wt% of the active material layer 114.

The binder functions to attach the positive electrode active material particles to each other and also to attach the positive electrode active material to the current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause an undesirable chemical change in the rechargeable lithium battery and conducts electrons can be used as the conductive material. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

When the active material layer 114 is a negative active material layer, the active material layer 114 may include the above-described negative active material, and further include a binder and/or a conductive material. The active material layer 114 may include 90 to 99 wt% of the negative active material, 0.5 to 5 wt% of the binder, and 0 to 5 wt% of the conductive material.

The binder may function to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart electrical conductivity to the electrode. Any material that does not cause an undesirable chemical change in the rechargeable lithium battery and that conducts electrons can be used as the negative electrode active material. Non-limiting examples of the negative electrode active material include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The material of the substrate layer 112 is not limited as long as the material has a high conductivity without causing chemical changes in a secondary battery. The substrate layer 112 may include, for example, copper, aluminum, stainless steel, nickel, titanium, calcined carbon, or a combination thereof. The substrate layer 112 may use a material selected from copper foil, nickel foil, stainless steel foil, titanium foil, nickel foam, copper foam, a polymer substrate coated with a conductive metal, or a combination thereof.

When the electrode for secondary battery 110 is a negative electrode, the substrate layer 112 may be formed in the form of a metal foil or a thin metal plate such as copper, copper alloy, stainless steel, nickel, or nickel alloy. When the electrode secondary battery 110 is a positive electrode, the substrate layer 112 may be formed in the form of a metal foil or a thin metal plate such as aluminum or an aluminum alloy.

The material of the substrate layer 112 is not limited to the materials listed above. Rather, any metallic materials having conductivity that is used in the technical field of the present disclosure may be used.

The active material layer 114 may be coated on at least one surface of the substrate layer 112. For example, the electrode for secondary battery 110 may include the substrate layer 112 formed by coating the active material layer 114 on a thin metal plate by applying an active material slurry on one or both surfaces of the thin metal plate. The electrode for secondary battery 110 may include a composite part where the active material layer 114 is arranged and a non-coated part where the active material layer 114 is not provided and the substrate 112 is exposed.

As shown in FIG. 1, the active material layer 114 may be coated at the center area of the substrate layer 112, and the non-coated part may be formed at both ends of the substrate layer 112. The width of the non-coated part disposed at both ends of the substrate layer 112 may vary depending on design.

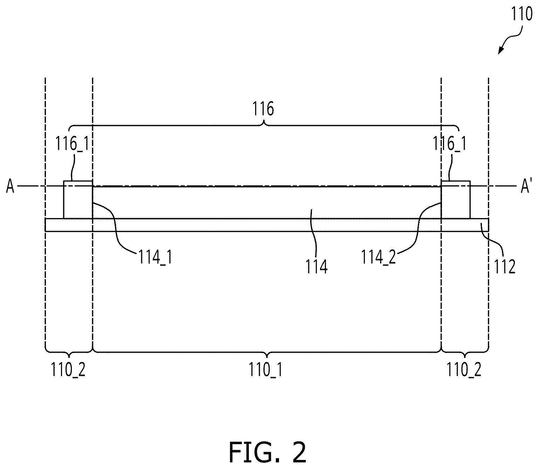

A guide member 116 may be formed along the side of the active material layer 114. The guide member 116 may be formed on at least one surface of the substrate layer 112 along the interface between the non-coated part and the composite part of the electrode for secondary battery 110. In such a configuration, the sides of the guide member 116 and the active material layer 114 may contact each other. The guide member 116 may be formed by being coated along the direction in which an active material slurry is coated when forming the active material layer 114. The detailed shape of the guide member 116 will be described below with reference to FIG. 2.

The width of the guide member 116 may be less than or equal to the width of the non-coated part. For example, the width of the guide member 116 may be 5% to 80%, 10% to 50%, or 15% to 30% of the width of the non-coated part.

The guide member 116 may be formed of a material that is harder than an active material slurry. The guide member 116 may guide the active material layer 114 to a uniform width by limiting the area where the active material slurry coated on the substrate layer 112 is arranged. That is, as the active material slurry is fluid, the guide member 116 guides the active material slurry coated on the substrate layer 112 such that the fully-formed active material layer 114 has a uniform thickness.

The guide member 116 may include a polymer that is cured by exposure to electromagnetic waves 104. For example, to form the guide member 116, a mixture of a photoinitiator and a polymerization monomer may be applied onto the substrate layer 112 and then exposed to the electromagnetic waves 104 to form a polymer. Here, the mixture of the photoinitiator and the polymerization monomer may be a fluid or an amorphous mixture.

The wavelength of the electromagnetic wave 104 may be 200 nm to 400 nm, 254 nm to 365 nm, 700 nm to 1200 nm, or 400 nm to 700 nm. The electromagnetic wave 104 may be irradiated to the guide member 116 with a specific wavelength range by a lamp 102 during the process of manufacturing the electrode for secondary battery 110. For example, the electromagnetic wave 104 may be generated by using an iron-based methyl halide Fe-based methyl halide (Metal Halide) compounds.

The polymer may be formed by the reaction of a photoinitiator and a polymerization monomer exposed to electromagnetic waves. According to embodiments, the amount of the photoinitiator may be 0.1 wt% to 5.0 wt%, 0.3 wt% to 3.0 wt%, or 0.5 wt% to 2.0 wt% with respect to 100 wt% of the polymer.

The polymerization monomer may be a main reactive material constituting the polymer and may form a polymer network through a polymerization reaction. The polymerization monomer may induce a polymerization reaction by rapidly reacting with radicals or cations generated when a photoinitiator is exposed to electromagnetic waves. The number of functional groups or the molecular structure of the polymerization monomer may be selected depending on the desired hardness of the polymer.

The polymer and the polymerization monomer, which is the main reactive material constituting the polymer, may be insulating. The polymerization monomer may include an acrylate monomer, an epoxy monomer, a urethane monomer, a vinyl ether monomer, or a combination thereof. For example, the polymerization monomer may include trimethylolpropane triacrylate (TMPTA), 1,4-butanediol diacrylate (BDDA), 2-ethylhexyl acrylate (2-EHA), 2-hydroxypropyl acrylate (2-HPA), pentaerythritol tetraacrylate (PETA), glycidyl acrylate, or a combination thereof.

The polymerizable monomer may be a multifunctional monomer. For example, the polymerizable monomer may include trimethylolpropane triacrylate (TMPTA), 1,4-butanediol diacrylate (BDDA), or a combination thereof. The multifunctional monomer may increase the curing speed of the polymer and the hardness of the final cured product as compared to low viscosity monomers such as 2-ethylhexyl acrylate (2-EHA).

The photoinitiator may include a radical photoinitiator, a cationic photoinitiator, or a combination thereof.

The radical photoinitiator may include a Hexaarylbiimidazole (HABI) functional group. When exposed to electromagnetic waves, the HABI functional group may generate radicals by breaking imine or imidazole bonds. The radical photoinitiator including the HABI functional group may be highly reactive and react with a polymerization monomer to rapidly induce a polymerization reaction.

The photoinitiator may include, for example, 2-Benzyl-2-(4-cyanophenyl)-4,5-diphenylimidazole dimer (BCIM), 4-(4-chlorophenyl)-2,5-diphenylimidazole dimer (CZ-HABI), 2,4,5-triphenylimidazole dimer (WJ-HABI), 2,4-dichlorophenyl-substituted hexaarylbiimidazole (2,4-DC-HABI), Bis(4-methoxyphenyl)-4,5-diphenylimidazole (BMOIM) or a combination thereof.

In the electrode for secondary battery 110 according to embodiments of the present disclosure, the guide member 116 formed along the side of the active material layer 114 may cause the thickness of the active material layer 114 that is coated during an electrode coating process to be uniform.

FIG. 2 is a plane view illustrating a cross-section of an electrode for secondary battery according to embodiments of the present disclosure. Specifically, FIG. 2 is a cross-section of the electrode for secondary battery 110 taken along line A-A' of FIG. 1.

Referring to FIG. 2, the guide member 116 may include a first guide block 116_1, and a second guide block 116_2. The active material layer 114 may be disposed between the first guide block 116_1 and the second guide block 116_2. And the guide member 116 may be formed along both sides of the active material layer 114.

As described above, the active material layer 114 may be coated on at least one surface of the substrate layer 112. In some embodiments, the electrode for secondary battery 110 may include a composite part 110_1 where the active material layer 114 is disposed and a non-coated part 110_2 where the active material layer 114 is not provided and the substrate layer 112 is exposed. As shown in FIG. 2, the composite part 110_1 may be arranged at the center of the substrate layer 112, and the non-coated part 110_2 may be arranged on both sides of the substrate layer 112. The width of the non-coated part 110_2 may vary depending on the design.

Each of a first side surface 114_1 of the active material layer 114 contacting the first guide block 116_1 and a second side surface 114_2 of the active material layer 114 contacting the second guide block 116_2 extends perpendicular to the substrate layer 112. During the electrode coating process, an active material slurry may be coated between the first side surface 114_1 and the second side surface 114_2 of the active material layer 114 and perpendicular to the substrate layer 112. Thus, the active material layer 114 may be provided with a uniform thickness.

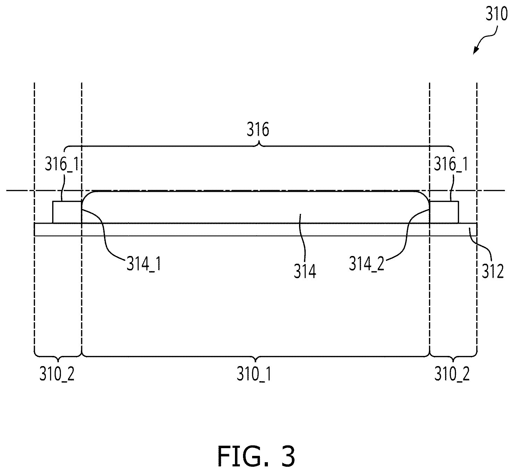

The thickness of the guide member 116 may be equal to or greater than that of the active material layer 114. The thickness of the active material layer 114 may be uniform over the composite part 110_1. An embodiment where the thickness of the guide member 116 is less than that of the active material layer 114 will be described below with reference to FIG. 3.

According to embodiments of the present disclosure, during the electrode coating process when manufacturing the electrode for secondary battery 110, the thickness deviation of the active material layer 114 that occurs during a conventional electrode composite coating process may be minimized, and the defect rate of cells may be reduced during the winding process or a stacking process of the electrode 110.

FIG. 3 is a plane view illustrating a cross-section of an electrode for secondary battery according to another embodiment of the present disclosure. Specifically, FIG. 3 is a cross-sectional view illustrating the electrode for secondary battery 110 taken along line A-A' of FIG. 1.

Referring to FIG. 3, a guide member 316 may include a first guide block 316_1 and a second guide block 316_2. An active material layer 314 may be disposed between the first guide block 316_1 and the second guide block 316_2. The guide member 316 may be formed along both sides of the active material layer 314.

As described above, the active material layer 314 may be coated on at least one surface of the substrate layer 312. An electrode for secondary battery 310 may include a composite part 310_1 where the active material layer 314 is provided and a non-coated part 310_2 where the active material layer 314 is not provided and the substrate layer 312 is exposed. As shown in FIG. 3, the composite part 310_1 may be arranged at the center area of the substrate layer 312, and the non-coated part 310_2 may be arranged on both sides of the substrate layer 312. The width of the non-coated part 310_2 disposed at both sides of the substrate layer 312 may vary depending on design.

The thickness of the guide member 316 may be less than that of the active material layer 314. Due to surface tension of the active material layer 314 before solidifying, the thickness of the active material layer 314 may be less at both ends of the composite part 310_1 contacting the non-coated part 310_2. In this configuration, the curing rate of the polymer included in the guide member 316 may be faster, and the ratio of the polymer to the total weight of the electrode for secondary battery 310 may decrease, so that the energy density may increase.

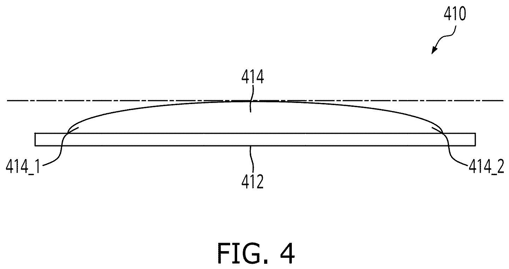

Each of a first side surface 314_1 of the active material layer 314 contacting the first guide block 316_1 and a second side surface 314_2 of the active material layer 314 contacting the second guide block 316_2 may be perpendicular to the substrate layer 312. During an electrode coating process, an active material slurry may be coated between the first side surface 314_1 and the second side surface 314_2 of the active material layer 114, with the active material slurry being positioned perpendicular to the substrate layer 312. Thus, the active material layer 314 may have a uniform thickness as compared to a comparative example of FIG. 4 that does not include the guide member 316.

FIG. 4 illustrates a comparative example in a cross-sectional view of an electrode for secondary battery that does not include a guide member.

Referring to FIG. 4, in a comparative electrode for secondary battery 410, an active material layer 414 may be coated on at least one surface of a substrate layer 412. During an electrode coating process, the thickness of the active material layer 414 may vary. Without a guide member, surface forces will cause the amount of active material slurry coated at the center area of the substrate layer 412 may be greater than that of the active material slurry coated at the sides of the substrate layer 412. Thus, the center area of the active material layer 414 may be convex. As shown in FIG. 4, the thickness of a first side surface 414_1 and a second side surface 414_2 positioned at ends of the active material layer 414 may be less than the thickness of the center of the active material layer 414.

The thickness variation of the active material layer 414 may lead to the thickness variation of the electrode 410, which affects the quality consistency of the electrode 410. That is, during the winding process or stacking process of the electrode, a defect rate of cells may increase, which shows the need for the deviation-revised electrode for secondary battery and a method for manufacturing an electrode for secondary battery according to the present disclosure.

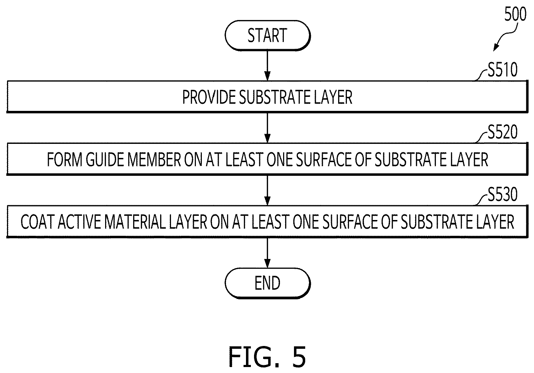

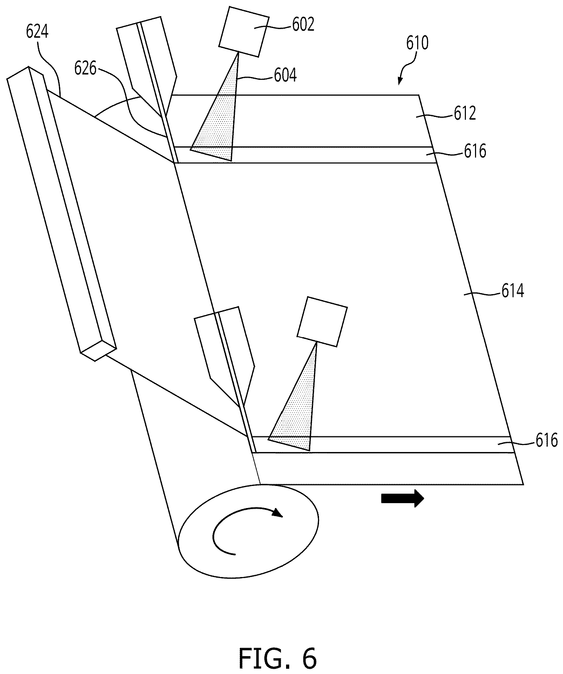

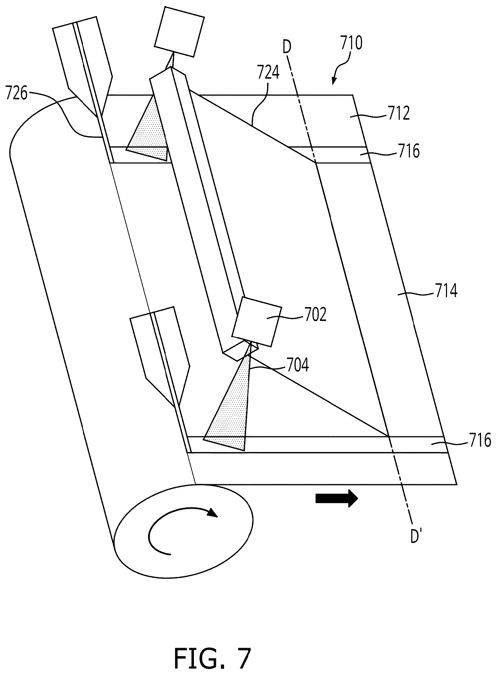

FIG. 5 is a flow chart of a method for manufacturing an electrode for secondary battery according to embodiments of the present disclosure. FIG. 6 and FIG. 7 are views illustrating an electrode manufacturing device for embodying a method of manufacturing an electrode for secondary battery according to embodiments of the present disclosure.

Referring to FIG. 5, a method of manufacturing an electrode for secondary battery may start by providing a substrate layer in step S510.

A guide member may be formed on at least one surface of the substrate layer in step S520. The guide member may include a polymer that is cured by exposure to electromagnetic waves. According to embodiments, the polymer may include a photoinitiator and a polymerization monomer, and the step of forming S520 may include the step of exposing the photoinitiator and the polymerization monomer to electromagnetic waves.

The photoinitiator and the polymerization monomer may have the same or similar composition as the photoinitiator and the polymerization monomer described above with reference to FIG. 1. For example, the polymerization monomer may include trimethylolpropane triacrylate (TMPTA), 1,4-butanediol diacrylate (BDDA), 2-ethylhexyl acrylate (2-EHA), 2-hydroxypropyl acrylate (2-HPA), pentaerythritol tetraacrylate (PETA), glycidyl acrylate, or a combination thereof. The photoinitiator may include a radical photoinitiator, a cationic photoinitiator, or a combination thereof. Additionally, according to one embodiment of the present disclosure, the radical photoinitiator may include Hexaarylbiimidazole (HABI) as a functional group.

According to embodiments of the present disclosure, the wavelength of the electromagnetic wave may be 200 nm to 400 nm, 254 nm to 365 nm, 700 nm to 1200 nm, or 400 nm to 700 nm.

The step of forming S520 may include forming a first guide block and a second guide block on at least one surface of a substrate layer, with a predetermined distance between the first and second guide blocks. The step of coating may include discharging an active material slurry between the first guide block and the second guide block.

The active material layer may be coated on at least one surface of the substrate layer in step S530.

According to embodiments of the present disclosure, the step of forming in step S520 and the step of coating in step S530 may be performed simultaneously. A description thereof will be given with reference to FIG. 6.

Referring to FIG. 6, in a manufacturing process of an electrode for secondary battery 610, a substrate layer 612 may be moved in one direction (e.g., the direction from left to right side of FIG. 6) by a conveyor belt. A mixture 626 of a photoinitiator and a polymerization monomer may be applied to at least one surface of the provided substrate layer 612 to form the guide members 616. Thereafter, the mixture 626 may be exposed to electromagnetic waves 604 irradiated from a lamp 602 to form the guide members 616 including a cured polymer.

An active material layer 624 may be disposed between the guide members 616 to form an active material layer 614 at the same time the guide member 616 is formed. The guide member 616 may be formed only by irradiating electromagnetic waves without any additional process. Thus, the active material layer 614 is coated simultaneously with formation of the guide members 616, so the electrode for secondary battery 610 may be rapidly manufactured.

In other embodiments, the step of coating in step S530 may be subsequently performed after the step of forming in step S520. A description of such embodiments will be given with reference to FIG. 7.

Referring to FIG. 7, in a manufacturing process of an electrode for secondary battery 710, a substrate layer 712 may be moved in one direction (e.g., the direction from left to right side of FIG. 7) by a conveyor belt. A mixture 726 of a photoinitiator and a polymerization monomer may be applied to at least one surface of the substrate layer 712 to form the guide members 716. The mixture 726 may be exposed to electromagnetic waves 704 irradiated from a lamp 702 to form the guide members 716 including a cured polymer.

After the guide members 716 is formed by a curing process, an active material slurry 724 may be coated between the guide members 716. The time indicated by the line D-D' at which the active material slurry 724 is coated may be performed is after the mixture 726 is coated for forming the guide members 716. The active material slurry 724 may form an active material layer 714, for example, through a solvent removal process. The time between the step of coating in step S530 and the step of forming in step 520 may be less than one second.

A method of manufacturing an electrode for secondary battery 500 may suppress the thickness variation that occurs on an electrode plate of a secondary battery, thereby providing an electrode for secondary battery that is effective, fast, and of uniform quality. And the process can be performed with the mere addition of irradiating electronic waves to form the guide members.

An electrode for secondary battery may include one or more composite parts on one substrate layer and may have a plurality of patterns. The coating in step S530 of the method of manufacturing the electrode for secondary battery 500 may include coating an active material layer on one or more substrates.

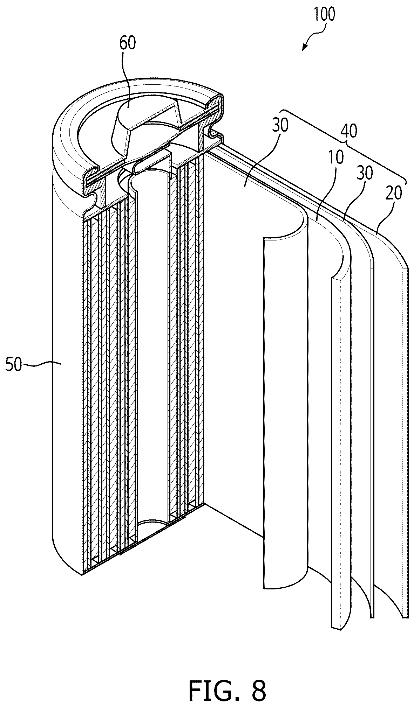

FIG. 8 to FIG. 11 are views illustrating secondary batteries according to embodiments of the present disclosure.

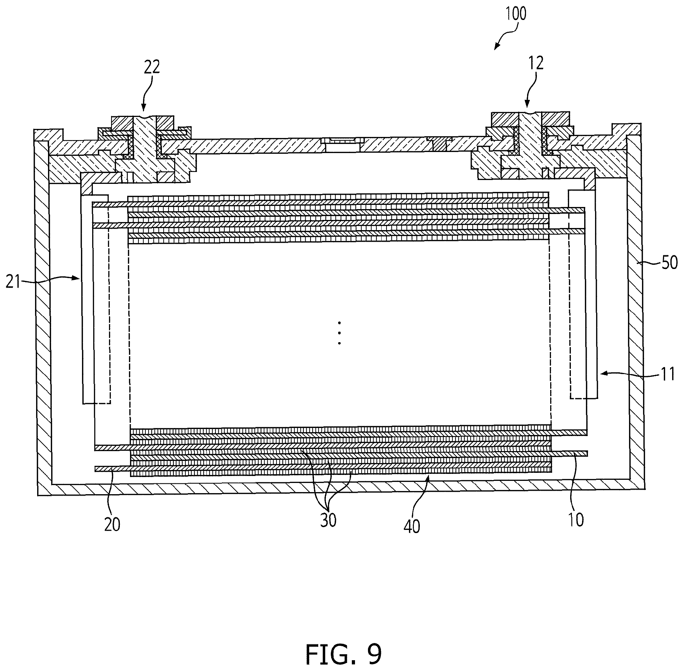

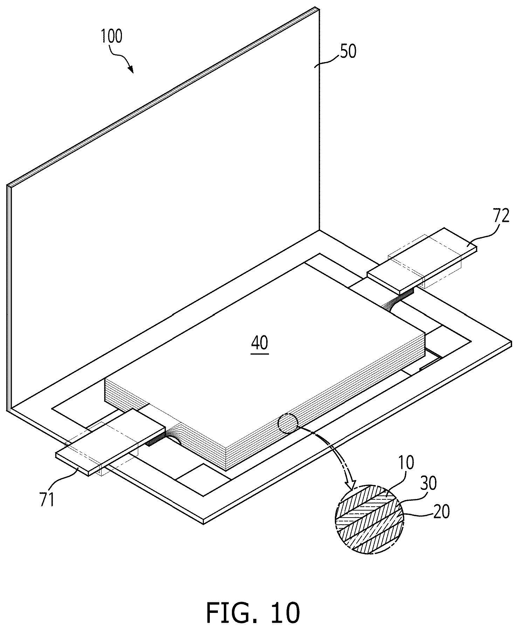

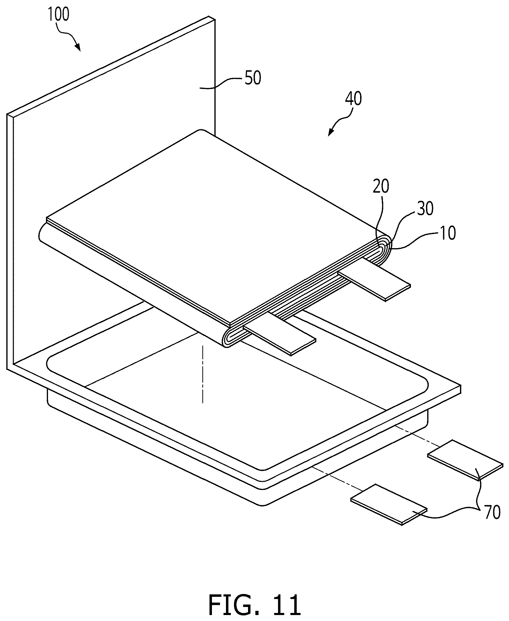

Referring to FIG. 8 to FIG. 11, a secondary battery 100 according to embodiments may have a cylindrical shape, a square shape, a pouch shape, a coin shape, etc. FIG. 8 to FIG. 11 are schematic views illustrating a lithium secondary battery according to embodiments, FIG. 8 illustrates a cylindrical battery, FIG. 9 illustrates a square-shaped battery, and FIG. 10 and FIG. 11 illustrates a pouch-shaped battery.

The secondary battery 100 may include an electrode assembly 40 in which a separator 30 is stacked between a first electrode 10 and a second electrode 20. The electrode assembly 40 may be accommodated in a case. The first electrode 10, the second electrode 20, and the separator 30 may be impregnated with an electrolyte (not shown).

The first electrode 10 may be a positive electrode or a negative electrode in a secondary battery. The second electrode 20 may be an electrode of the opposite polarity to the first electrode 10. For example, when the first electrode 10 is a positive electrode, the second electrode 20 may be a negative electrode. Conversely, when the first electrode 10 is a negative electrode, the second electrode 20 may be a positive electrode.

The first electrode 10 or the second electrode 20 may have the same or similar as the electrodes for secondary batteries 110, 310, 610, and 710 described above with reference to FIG. 1 to FIG. 7.

For example, the first electrode 10 or the second electrode 20 may include a substrate layer and an active material layer coated on at least one surface of the substrate. A guide member may be formed along the side surface of the active material layer, and the guide member may include a polymer cured upon exposure to electromagnetic waves. In some embodiments, the polymer may be formed by the reaction of a photoinitiator and a polymerization monomer exposed to electromagnetic waves.

As shown in FIG. 8, the secondary battery 100 may include a sealing member 60 that seals a case 50. Referring to FIG. 9, the secondary battery 100 may include a first electrode lead tab 11, a first electrode terminal 12, a second electrode lead tab 21, and a second electrode terminal 22. Referring to FIG. 10 and FIG. 11, the secondary battery 100 may include an electrode tab 70 that forms an electrical path for inducing a current formed in the electrode assembly 40 to outside, i.e., a first electrode tab 71, and a second electrode tab 72.

Lithium secondary batteries according to embodiments of the present disclosure may be used in automobiles, mobile phones, and/or various types of electrical devices. But the present disclosure is not limited to these examples.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure.

## Claims

1. An electrode for secondary battery, the electrode comprising:
a substrate layer (112, 312, 412, 612, 712);
an active material layer (114, 414, 614, 714) coated on at least one surface of the substrate layer (112, 312, 412, 612, 712); and
a guide member (116, 316, 616, 716) formed along sides of the active material layer (114, 414, 614, 714),
wherein the guide member (116, 316, 616, 716) comprises a polymer cured by exposure to electromagnetic waves.

2. The electrode for secondary battery as claimed in claim 1, wherein the polymer is formed by a reaction between a photoinitiator and a polymerization monomer exposed to the electromagnetic waves.

3. The electrode for secondary battery as claimed in claim 2, wherein the polymerization monomer comprises trimethylolpropane triacrylate (TMPTA), 1,4-butanediol diacrylate (BDDA), 2-ethylhexyl acrylate (2-EHA), 2-hydroxypropyl acrylate (2-HPA), pentaerythritol tetraacrylate (PETA), glycidyl acrylate, or a combination thereof.

4. The electrode for secondary battery as claimed in claim 2, wherein the photoinitiator comprises a radical photoinitiator, a cationic photoinitiator, or a combination thereof.

5. The electrode for secondary battery as claimed in claim 4, wherein the radical photoinitiator comprises a hexaarylbiimidazole (HABI) functional group.

6. The electrode for secondary battery as claimed in any one of claims 1-5, wherein a wavelength of the electromagnetic wave is 254 nm to 365 nm.

7. The electrode for secondary battery as claimed in any one of claims 1-6, wherein the guide member (116, 316, 616, 716) comprises a first guide block (116_1, 316_1) and a second guide block (116_2, 316_2), and
wherein the active material layer (114, 414, 614, 714) is disposed between the first guide block (116_1, 316_1) and the second guide block (116_2, 316_2).

8. The electrode for secondary battery as claimed in claim 7, wherein a first side surface (114_1, 314_1, 414_1) of the active material layer (114, 414, 614, 714) contacting the first guide block (116_1, 316_1) is perpendicular to the substrate layer (112, 312, 412, 612, 712) and a second side surface (114_2, 314_2, 414_2) of the active material layer (114, 414, 614, 714) contacting the second guide block (116_2, 316_2) is perpendicular to the substrate layer (112, 312, 412, 612, 712).

9. The electrode for secondary battery as claimed in any one of claims 1-8, wherein a thickness of the guide member (116, 316, 616, 716) is equal to or greater than a thickness of the active material layer (114, 414, 614, 714).

10. The electrode for secondary battery as claimed in any one of claims 1-8, wherein a thickness of the guide member (116, 316, 616, 716) is less than a thickness of the active material layer (114, 414, 614, 714).

11. A method of manufacturing an electrode for secondary battery, the method comprising:
providing a substrate layer (S510);
forming a guide member on at least one surface of the substrate layer (S520); and
coating an active material layer on the at least one surface of the substrate layer (S530),
wherein the guide member comprises a polymer cured by exposure to electromagnetic waves.

12. The method as claimed in claim 11, wherein the polymer comprises a photoinitiator and a polymerization monomer, and
wherein forming the guide member (S520) comprises exposing the photoinitiator and the polymerization monomer to the electromagnetic waves.

13. The method as claimed in claim 11 or claim 12, wherein the forming (S520) and the coating (S530) are performed simultaneously.

14. The method as claimed in claim 11 or claim 12, wherein the coating (S530) is performed after forming the guide member (S520).

15. The method as claimed in claim 11, wherein forming the guide member (S520) comprises forming a first guide block and a second guide block on the at least one surface of the substrate layer with a predetermined distance between the first guide block and the second guide block, and
wherein coating the active material (S530) comprises discharging an active material slurry between the first guide block and the second guide block.
